Europäisches Patentamt

European Patent Office

Office européen des brevets

(19)

(11) Numéro de publication: **0 045 259**
**B1**

(12) **FASCICULE DE BREVET EUROPEEN**

(45) Date de publication du fascicule du brevet:
04.04.84

(51) Int. Cl.³: **E 02 B 17/06**

(21) Numéro de dépôt: **81401198.7**

(22) Date de dépôt: **27.07.81**

(54) **Dispositif de sécurité pour plate-forme marine.**

(30) Priorité: 30.07.80 FR 8016816
01.06.81 FR 8110809

(43) Date de publication de la demande:
03.02.82 Bulletin 82/5

(45) Mention de la délivrance du brevet:
04.04.84 Bulletin 84/14

(84) Etats contractants désignés:
AT BE CH DE FR GB IT LI LU NL SE

(56) Documents cités:
US - A - 2 846 851
US - A - 2 924 077
US - A - 3 044 269
US - A - 3 183 676
US - A - 3 343 371
US - A - 3 762 235

(73) Titulaire: **BRISSONNEAU ET LOTZ MARINE Société anonyme dite:, Rue de la Métallurgie Zone Industrielle, F-44470 Carquefou-Nantes (FR)**

(72) Inventeur: **Gulader, Alain, 72, Boulevard Robert Schuman, F-44300 Nantes (FR)**

(74) Mandataire: **Lejet, Christian, 31-32, Quai de Dion Bouton, F-92811 Puteaux Cedex (FR)**

### Dispositif de sécurité pour plate-forme marine

La présente invention concerne les plates-formes marines notamment prévues pour effectuer des opérations de forage en mer et, plus précisément, les plates-formes pourvues d'une pluralité de pattes rétractables permettant, en position relevée, le déplacement de la plate-forme par flottaison et, en position d'appui sur le fond marin, l'élévation de la plate-forme au-dessus de la surface de la mer au moyen de dispositifs élévateurs comprenant, pour chacune des pattes, au moins une paire de pignons engrenant sur les crémaillères prévues à cet effet.

De telles plates-formes ont, par exemple, été décrites dans les brevets américains 2 924 077 et 3 044 269 (Le Tourneau).

D'une manière générale, les courants marins et/ou les vents engendrent des forces extérieures qui sont appliquées aux différentes pattes de la plate-forme et qui viennent s'ajouter au propre poids de cette dernière. Dans le but de s'opposer à ces forces, des patins de guidage solidaires de la plate-forme sont généralement prévus en regard des pattes.

Il résulte de cette disposition que des forces verticales variables sont appliquées aux points de contact des dents des pignons des dispositifs élévateurs et des crémaillères solidaires des pattes.

Si par temps calme, ces forces sont négligeables, elles peuvent devenir très importantes en cas de tempête, ce qui limite la charge utile de la plate-forme.

En outre, les pignons des dispositifs élévateurs supportant en permanence au moins le poids de la plate-forme, il est très difficile de changer en mer un mécanisme qui se révèlerait défectueux dans un dispositif élévateur. Cette opération devient pratiquement impossible en cas de tempête.

Dans le double but d'éviter les effets de ces forces, et de permettre, si nécessaire, l'échange d'un mécanisme en mer, il est connu d'introduire des cales entre les dents des crémaillères au moyen de vérins s'appuyant sur la plate-forme et interdisant tout mouvement postérieur, ou d'utiliser un organe de verrouillage tel que décrit dans le brevet américain 3 343 371 (correspondant au préambule de la revendication 1).

Toutefois, de tels dispositifs qui sont indépendants des dispositifs élévateurs présentent l'inconvénient de ne pouvoir être que difficilement automatisés puisque les cales doivent être précisément positionnées entre les dents de la crémaillère pour être efficaces.

En outre, un tel dispositif, puisqu'il n'est pas toujours en prise avec la crémaillère, ne peut être mis en place que lors de l'arrêt complet du mouvement relatif des pattes et de la plate-forme et ne peut pas, de ce fait, constituer un dispositif de sécurité utilisable pendant la période critique où la plate-forme s'élève au-dessus de la surface de la mer.

La présente invention a pour but d'obvier à ces inconvénients au moyen d'un dispositif simple dont le fonctionnement puisse être totalement automatique et qui puisse fonctionner à tout moment.

Selon l'invention, le dispositif de sécurité comprend, pour chacune des pattes munies de crémaillères, au moins une paire de pignons montée sur un châssis pourteur fixé à la plate-forme, les pignons, aux essieux desquels est associé un frein débrayable, engrenant sur la crémaillère d'un même côté de cette dernière.

De préférence, le châssis porteur est fixé à la plate-forme au moyen d'une articulation à laquelle on peut éventuellement faire subir un mouvement de translation perpendiculairement à la crémaillère de manière à entraîner avec elle le châssis porteur. Ce mouvement de translation peut être notamment obtenu au moyen d'un excentrique.

Selon un mode de réalisation de l'invention, des moyens élastiques sont prévus entre le châssis porteur et la plate-forme.

La présente invention sera mieux comprise et d'autres buts, avantages et caractéristiques de celle-ci apparaîtront plus clairement à la lecture de la descritpion qui suit et à laquelle quatre planches de dessin sont annexées.

La figure 1 représente schématiquement en coupe verticale dans le plan d'une crémaillère, un type de dispositif élévateur avec amortissement élastique auquel est adjoint un dispositif de sécurité conforme à la présente invention.

La figure 2 représente de la même façon un autre type de dispositif élévateur fixé rigidement à la plate-forme auquel est également adjoint un dispositif de sécurité conforme à la présente invention.

La figure 3 représente un mode de réalisation dans lequel le châssis porteur des moyens de commande de blocage et le dispositif élévateur sont fixés sur les éléments supports latéraux d'un bâti commun et la figure 4 représente un mode de réalisation suivant lequel le châssis porteur des moyens de commande de blocage et le dispositif élévateur sont fixés sur des bâtis indépendants.

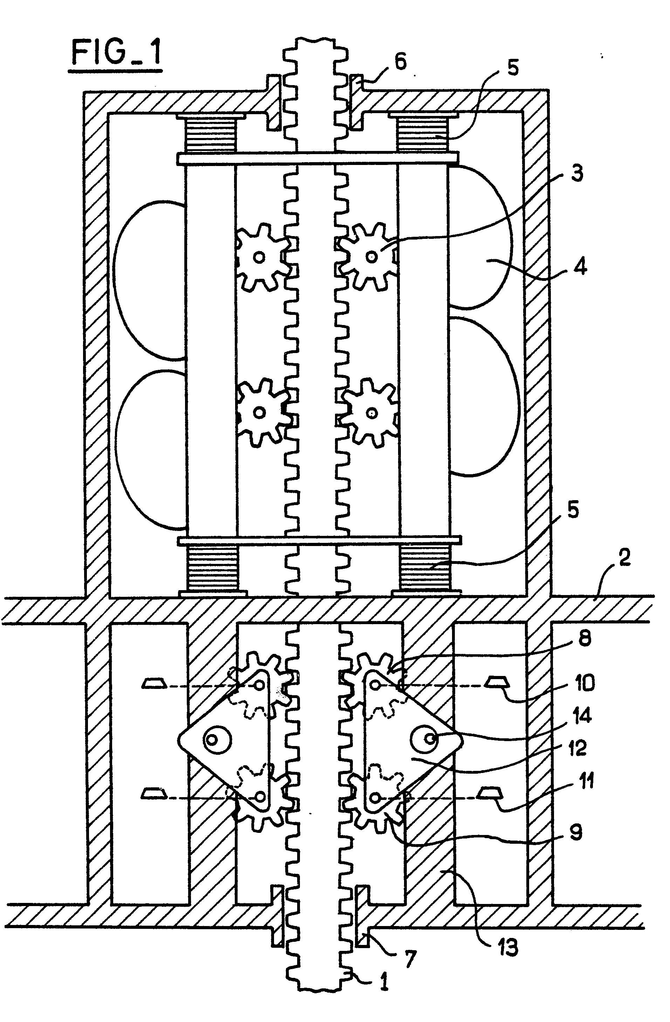

En référence maintenant à la figure 1, la crémaillère 1 est solidaire de l'une des pattes rétractables de la plate-forme 2.

Le dispositif élévateur est, de manière connue, constitué de pignons 3 engrenant dans la crémaillère, ces pignons étant entraînés en rotation au moyen de mécanismes moteurs généralement par l'intermédiaire de réducteurs 4.

L'ensemble de chaque dispositif élévateur est monté flottant par rapport à la plate-forme au moyen de coussins élastiques 5.

Des patins de guidage 6 et 7 sont respectivement prévus au sommet du dispositif élévateur et dans la partie basse de la plate-forme.

Avec ce type de dispositif élévateur, les forces en présence sont décomposées de telle manière que les forces engendrées par le poids de la plate-forme soient seules appliquées aux points de contact des dents des pignons et de la crémaillère, tandis que les forces extérieures sont respectivement appliquées aux patins de guidage 6 et 7 qui sont solidaires de la plate-forme. Avec ce type de dispositif élévateur, le dispositif de sécurité selon l'invention permet de reprendre des forces verticales supportées par les pignons du dispositif élévateur, en particulier lorsqu'un mécanisme est défectueux.

Ce dispositif de sécurité indépendant est constitué, sur les figures par deux ensembles comprenant chacun deux pignons 8 et 9 aux essieux desquels un frein 10, 11 normalement serré est associé.

Un tel frein peut être, par exemple, du type à disques ou à sabots.

Les deux pignons 8 et 9 sont montés sur un châssis porteur 12 fixé au bâti 13 de la plate-forme au moyen d'une articulation 14 qui est, de préférence, constituée par un excentrique.

En effet, pur que ce dispositif de sécurité ne soit pas une gêne lors des déplacements verticaux de la plate-forme, un jeu doit être ménagé entre les crémaillères des pattes et les pignons 8 et 9 dont les freins 10 et 11 sont alors desserés. Mais, en position de repos de la plate-forme, aucun jeu ne doit subsister entre les pignons 8 et 9 et la crémaillère. L'excentrique 14 a alors pour rôle de déplacer le châssis porteur 12 vers la crémaillère pour éliminer ce jeu. Les freins 10 et 11 sont alors resserrés.

De préférence, la position de repos des freins 10 et 11 est la position serrée.

On constate donc qu'un tel dispositif de sécurité est toujours prêt à fonctionner en particulier pendant les manœuvres de la plate-forme. Il constitue donc un réel dispositif de sécurité dont le fonctionnement peut, en outre, être aisément automatisé et commandé en même temps que les dispositif élévateurs à partir du poste de commandement central de la plate-forme.

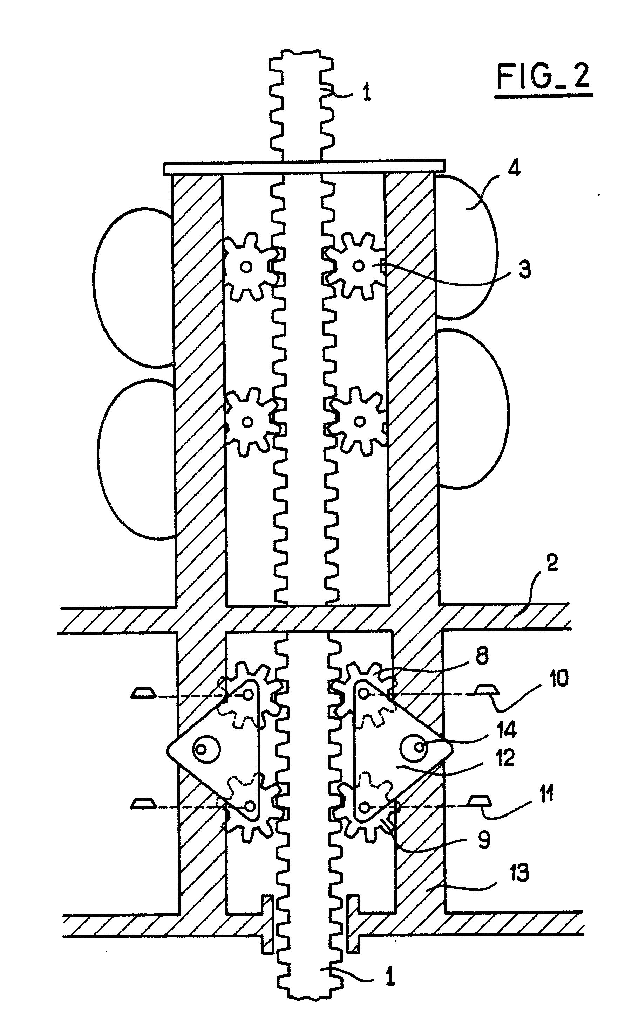

En référence maintenant à la figure 2, un autre type de dispositif élévateur est représenté. Ici, les mécanismes 4 sont solidaires de la plate-forme 2. Sans le dispositif de sécurité selon l'invention, les dents des pignons 3 supportent le poids de la plate-forme et constituent, en outre, les points d'application des forces extérieures. Le dispositif de sécurité, selon l'invention, permet donc de suppléer au rôle des pignons 3 du dispositif élévateur.

On peut constater aisément qu'il n'y a aucune position privilégiée relative entre les pattes et la plate-forme pour que le dispositif de sécurité puisse fonctionner, puisque ce dernier reste toujours en prise sans qu'il soit nécessaire de rechercher la coincidence des dents des pignons et de la crémaillère.

Il faut souligner enfin, qu'un tel dispositif peut être avantageusement utilisé en outre lorsque, de manière à enfoncer les pattes dans le fond marin, une surcharge de poids est appliquée temporairement et successivement à chaque patte.

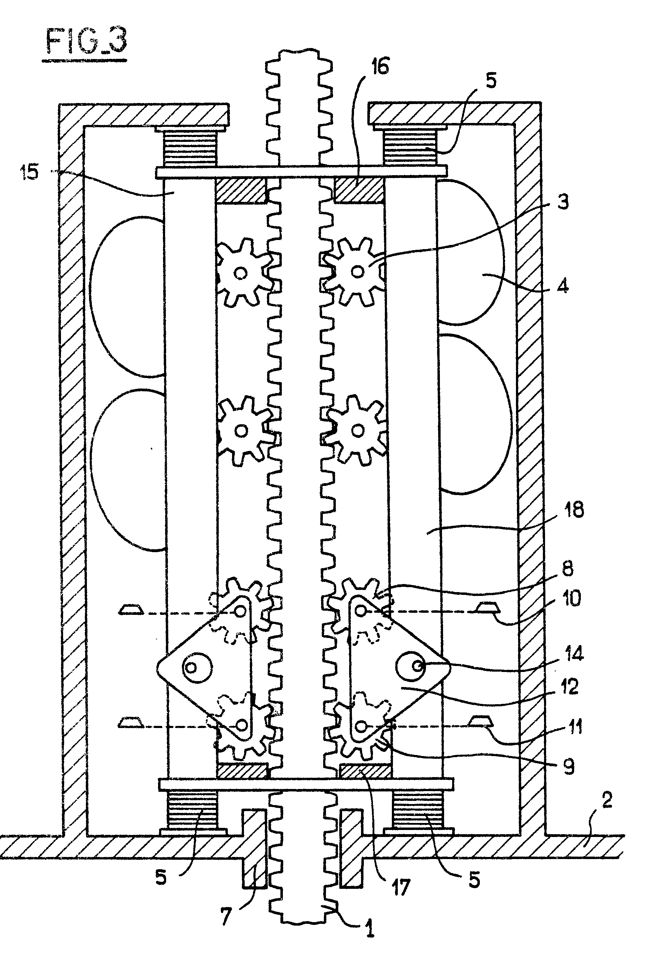

En référence maintenant à la figure 3, le châssis porteur 12 est directement monté sur des éléments latéraux 18 du bâti support 15 du dispositif élévateur constitué par les pignons 3 engrenant avec la crémaillère 1 et les moteurs 4 d'entraînement. Le bâti support 15 commun est maintenu en place dans la structure de la plate-forme 2 par l'intermédiaire de moyens élastiques 5. Les références 16 et 17 désignent des moyens complémentaires de guidage des mouvements relatifs entre la crémaillère 1 et le bâti support 15 du dispositif élévateur agissant sur cette dernière.

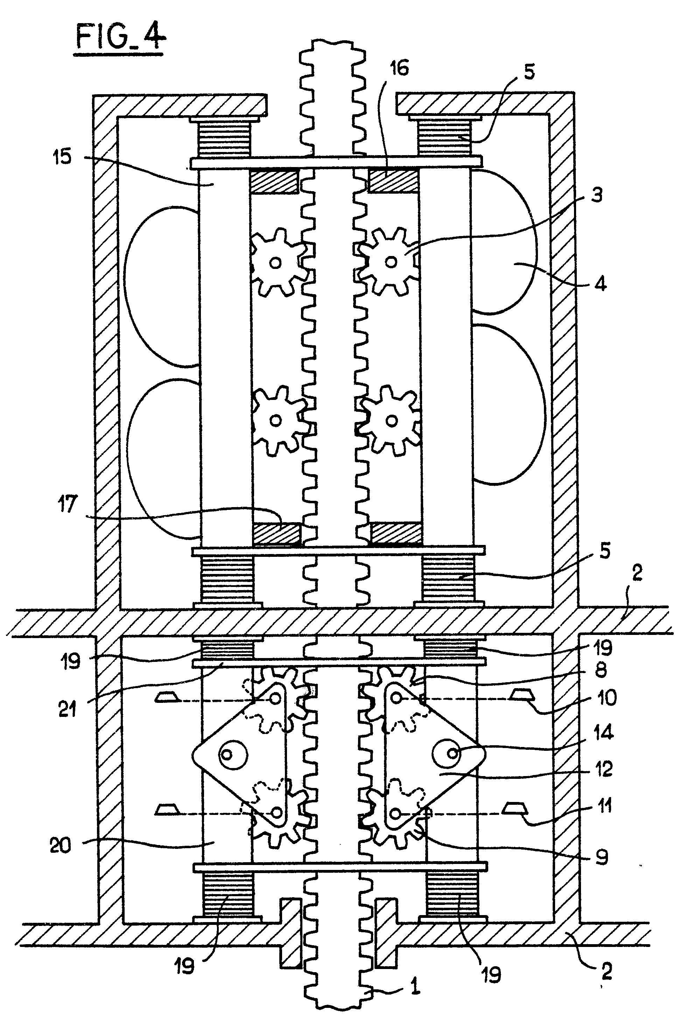

Sur la figure 4, le châssis support 12 est fixé sur les éléments latéraux 20 d'un bâti 21 indépendant du bâti 15 du dispositif élévateur qui lui est superposé, ledit bâti 21 étant maintenu en place dans la structure de la plate-forme par l'intermédiaire de moyens élastiques 19. Les références 16 et 17 désignent des moyens complémentaires de guidage identiques à ceux représentés sur la figure 3.

Une telle disposition flottante des moyens de commande de blocage de sécurité par rapport à la structure de la plate-forme permet en particulier de ne pas perdre les avantages apportés par la disposition flottante correspondante des moyens élévateurs et de multiplier le coefficient de sécurité de l'ensemble tout en n'augmentant pratiquement pas la sollicitation des moyens élévateurs en cas de fortes charges.

Bien que seuls certains modes préférés de réalisation de l'invention aient été décrits, il est évident que toute modification apportée par l'Homme de l'Art dans le même esprit ne sortirait pas du cadre de la présente invention tel que defini par les revendications. Par exemple, des coussins élastiques peuvent également être prévus latéralement entre les éléments latéraux du bâti et la partie verticale de la structure de la plate-forme, de manière à reprendre certaines forces latérales.

**Revendications**

1. Dispositif de sécurité pour plate-forme marine (2) notamment prévue pour effectuer des opérations de forage en mer, ladite plate-forme étant pourvue d'une pluralité de pattes rétractables munies de crémaillères (1) et permettant, en position relevée, le déplacement de ladite plate-forme par flottaison et, en position d'appui sur le fond marin, l'élévation de ladite plate-forme au-dessus de la surface de la mer au moyen de dispositifs élévateurs comprenant, pour chacune desdites pattes, au moins une paire de pignon (3) engrenant sur lesdites crémaillères, ledit dispositif de sécurité étant indépendant des dispositifs élévateurs et caractérisé en ce qu'il comprend, pour chacune desdites pattes munies de crémaillères (1), au moins une paire de pignons (8—9) montée sur un châssis porteur (12) fixé à ladite plate-forme (2), lesdits pignons (8—9), aux essieux desquels est associé un frein débrayable (10—11), engrenant sur ladite crémaillère d'un même côté de cette dernière.

2. Dispositif de sécurité selon la revendication 1 caractérisé en ce que ledit châssis porteur (12) est fixé à ladite plate-forme au moyen d'une articulation.

3. Dispositif de sécurité selon la revendication 2 caractérisé en ce que ladite articulation peut subir un mouvement de translation perpendiculairement à ladite crémaillère de manière à entraîner avec elle ledit châssis porteur.

4. Dispositif de sécurité selon la revendication 3 caractérisé en ce que ledit mouvement de translation est obtenu au moyen d'un excentrique (14).

5. Dispositif de sécurité selon l'une quelconque des revendications 1 à 4, caractérisé en ce que ledit châssis porteur (12) est fixé à ladite plate-forme (2) par l'intermédiaire de moyens élastiques (19).

6. Dispositif de sécurité selon la revendication 5, caractérisé en ce que le châssis porteur (12) est fixé sur les éléments latéraux (18) du bâti (15) supportant les moyens élévateurs agissant sur la crémaillère, ledit bâti (15) étant maintenu en place sur la structure de la plate-forme (2) par l'intermédiaire de moyens élastiques (5).

7. Dispositif de sécurité selon la revendication 5 caractérisé en ce que le châssis porteur (12) est fixé sur les éléments latéraux (20) d'un bâti (21) indépendant du bâti (15) supportant les moyens élévateurs qui lui est superposé, ledit bâti indépendant (21) étant maintenu en place sur la structure de la plate-forme par l'intermédiaire de moyens élastiques (19).

**Patentansprüche**

1. Sicherheitsvorrichtung für Meeresplattform (2), die insbesondere vorgesehen ist, um Bohrarbeiten im Meer durchzuführen, wobei die Plattform mit einer Mehrzahl von einziehbaren Füßen versehen ist, die mit Zahnstangen (1) ausgerüstet sind und in angehobener Stellung die Bewegung der Plattform durch Schwimmen und in Aufstützstellung auf dem Meeresboden das Anheben der Plattform über den Meeresspiegel mittels Hubvorrichtungen gestatten, die für jeden der Füße wenigstens ein Ritzelpaar (3) umfassen, das mit den Zahnstangen in Eingriff ist, wobei die Sicherheitsvorrichtung unabhängig von den Hubvorrichtungen und dadurch gekennzeichnet ist, daß sie für jeden der mit Zahnstangen (1) versehenen Füße wenigstens ein Ritzelpaar (8, 9) umfaßt, das an einem Trägerchassis (12) montiert ist, welches an der Plattform (2) befestigt ist, wobei die Ritzel (8, 9), an deren Achsen eine lösbare Bremse (10, 11) angreift, mit der Zahnstange auf derselben Seite derselben in Eingriff sind.

2. Sicherheitsvorrichtung nach Anspruch 1, dadurch gekennzeichnet, daß das Trägerchassis (12) an der Plattform mittels eines Gelenks befestigt ist.

3. Sicherheitsvorrichtung nach Anspruch 2, dadurch gekennzeichnet, daß das Gelenk eine Translationsbewegung senkrecht zu der Zahnstange ausführen kann, derart, daß sie das Trägerchassis mitnimmt.

4. Sicherheitsvorrichtung nach Anspruch 3, dadurch gekennzeichnet, daß die Translationsbewegung durch eine Exzenterelement (14) erhalten wird.

5. Sicherheitsvorrichtung nach einem der Ansprüche 1 bis 4, dadurch gekennzeichnet, daß das Trägerchassis (12) an der Plattform (2) über elastische Mittel (19) befestigt ist.

6. Sicherheitsvorrichtung nach Anspruch 5, dadurch gekennzeichnet, daß das Trägerchassis (12) an den seitlichen Elementen (18) des Gerüstes (15) befestigt ist, welches die Hubmittel trägt, die auf die Zahnstange einwirken, wobei das Gerüst (15) an der Struktur der Plattform (2) über elastische Mittel (5) festgehalten wird.

7. Sicherheitsvorrichtung nach Anspruch 5, dadurch gekennzeichnet, daß das Trägerchassis (12) an den seitlichen Elementen (20) eines Gerüstes (21) befestigt ist, das unabhängig von dem Gerüst (15) ist, welches die Hubmittel trägt und über ihm angeordnet ist, wobei das unabhängige Gerüst (21) an der Struktur der Plattform über elastische Mittel (19) in Stellung gehalten ist.

**Claims**

1. Safety device for offshore platform (2) intended more particularly for carrying out offshore drilling operations, the said platform being provided with a plurality of retractable legs provided with racks (1) and allowing, when in the raised position, the shifting of the said platform by flotation and, when in the position bearing on the sea bed, the elevating of the said platform above the surface of the sea by means of elevating devices comprising, for each of the said legs, at least one pair of pinions (3) meshing with the said racks, the said safety device being independent of the elevating devices and characterised in that it comprises, for each of the said legs provided with racks (1), at least one pair of pinions (8—9) mounted on a supporting frame (12) fixed to the said platform (2), a disengageable brake (10—11) being associated with the axles of the said pinions (8—9) and the said pinions meshing with the said rack at one and the same side of the latter.

2. Safety device according to claim 1, characterised in that the said supporting frame (12) is fixed to the said platform by means of an articulation.

3. Safety device according to claim 2, characterised in that the said articulation can undergo a translational movement perpendicularly to the said rack in such a manner as to entrain with it the said supporting frame.

4. Safety device according to claim 3, characterised in that the said translational movement is obtained by means of an eccentric (14).

5. Safety device according to any one of claims 1 to 4, characterised in that the said supporting frame (12) is fixed to the said platform (2) by means of elastic means (19).

6. Safety device according to claim 5, characterised in that the supporting frame (12) is fixed on the lateral elements (18) of the frame (15) supporting the elevating means acting on the rack, the said frame (15) being held in place on the structure of the platform (2) through the agency of elastic means (5).

7. Safety device according to claim 5, characterised in that the supporting frame (12) is fixed on the lateral elements (20) of a frame (21) independent of the frame (15) supporting the elevating means which is superposed on it, the said independent frame (21) being held in place on the structure of the platform through the agency of elastic means (19).

FIG_1

FIG_2

FIG_3

# FIG. 4